# EUROPEAN PATENT APPLICATION

(11) **EP 3 534 610 A1**
(43) Date of publication of application: **04.09.2019**
(21) Application number: 18159073.8
(22) Date of filing: 28.02.2018
(51) Int. Cl.: H04N 21/2343, H04N 21/2347, H04N 21/254, H04N 21/266, H04N 21/435, H04N 21/4402, H04N 21/4405, H04N 21/442, H04N 21/4623, H04N 21/4627, H04N 21/6334, H04N 21/835, H04N 21/8355

(54) **HDR METADATA PROTECTION**

(71) Applicant: Koninklijke Philips N.V., 5656 AE Eindhoven (NL)
(72) Inventor: Ge, Xin (Essien), 5656 AE Eindhoven (NL); Ma, Fulong (Ernest), 5656 AE Eindhoven (NL); Xia, Fubiao (Xavier), 5656 AE Eindhoven (NL); Chen, Hongxin, 5656 AE Eindhoven (NL)
(74) Representative: de Haan, Poul Erik

(57) **Abstract**

A video player (200) processes a HDR video signal (215) that has a primary video stream representing SDR video and metadata defining a conversion from SDR into HDR video, or HDR video and metadata defining a conversion from the HDR into SDR video. The video signal also has license data representing decryption keys for the extended video. The video player communicates with a provider server, and receives the video signal. A processing unit (220) processes the primary video stream and the metadata in accordance with the license data for providing target video (225) according to brightness and/or color rendering capabilities of a target display device. An audit unit (230) generates logging data representing operations performed on the primary video stream or the metadata. A log report unit (240) outputs a log report to the provider server for enabling control of the license data.

## Description

### FIELD OF THE INVENTION

The invention relates to a video player, provider server and methods and digital data structure like video signals or components thereof, for allowing delivery and protection of high dynamic range images or video. Apparatuses include video players that receive, generate and/or render a target video signal, and provider servers that provide the video signal or signal components thereof. The signals may be broadcast and/or transferred via a network or storage medium, such as an optical disc or memory stick. Video players may include, for example, Blu-ray optical disc players, TV devices or set-top boxes receiving a broadcast signal, computers or portable devices receiving data from server via a network.

### BACKGROUND OF THE INVENTION

Recently image capturing, displaying and in particular encoding has improved video from so-called standard dynamic range (SDR) or low dynamic range imaging, as used for well-known classical, standardized systems like PAL or MPEG-2, to so-called high dynamic range of brightness and/or color, generally called extended video or HDR in this document.

Regarding brightness, illuminances in nature can range from 100,000 lux in sunlight, over typical office or room illuminations of around 500 lux, to e.g. 0.05 lux under quarter moonlight. Luminances (L) may range from 1 billion nit of the sun disk, to 10,000s of nits for lamps, to a couple of (ten) thousands of nit for objects in sunlight (like a building, cloud rims, or a white paper), to hundredths or 10s of nits for objects under (heavily) overcast sky or indoors, to 0.1 nit for a white paper under moonlight, etc. This doesn't necessarily mean one should render these luminances on a display in exactly the same way, rather, the picture should look artistically good, meaning at least that there should be approximately similar appearance differences for the regional luminances of objects when rendered on the display screen.

A further extension of image quality may be achieved by extending the color space compared to standard dynamic range (SDR) video. The extended video as discussed in this document is called high dynamic range (HDR) video and may have an extended brightness range, an extended color space, or a combination of an extended brightness range and extended color space.

WO2012/021705 discloses systems and methods for content delivery of at least two versions of video. The transfer signal has a first version of the content, a difference data representing a difference between the first version and second version of content, and metadata derived from transformation functions that relate the first and second version to a master version.

From the above it follows that generating HDR video and converting between HDR and SDR video according to metadata defining a conversion between the HDR video and the SDR video, are known as such. However, a considerable problem for content creators is that, in particular, the HDR version of the content has a high commercial value, and malicious parties are trying to get access to the HDR version and/or the SDR version and/or conversion metadata, which may all be components of a video signal. Thereto, various streams in such a video signal are usually encrypted, while also license data is distributed to users for enabling decryption. The license data may represent license conditions for the extended video.

In this document, the license data is considered a component of the video signal, while components of the video signal may be transferred to a video player together in a multiplexed format, or separately, or via separate communication channels such as record carriers, broadcasting and/or streaming via a network.

### SUMMARY OF THE INVENTION

It is an object of the invention to provide a video distribution system for transferring extended video to various devices that may be enabled for rendering the extended range video and/or standard video devices based on license conditions as represented by license data.

For this purpose, according to a first aspect of the invention, a video player is provided for processing a video signal according to a standardized transfer format, the standardized transfer format defining streams representing video content to be rendered;
the video signal representing extended video having an extended range of brightness and/or color with respect to standard video content having a standard range of brightness and/or color, the standard range being as defined in the standardized transfer format;
the video signal comprising
- a primary video stream representing standard video and metadata defining a conversion from the standard video into the extended video, or
- a primary video stream representing the extended video and metadata defining a conversion from the extended video into standard video;
and the video signal further comprising
- license data comprising primary key data for decrypting the primary video stream and/or metadata key data for decrypting the metadata;
   the video player being arranged for communicating with a provider server via a network, and the video player comprising
- at least one input unit for receiving the video signal and extracting the primary video stream, the metadata and the license data,
- a processing unit arranged to process the primary video stream and the metadata in accordance with the license data for providing target video according to brightness and/or color rendering capabilities of a target display device, and
- an audit unit arranged to generate logging data, the logging data representing at least one operation performed by the processing unit on the primary video stream or the metadata, and
- a log report unit arranged to output a log report representing the logging data to the provider server for enabling control of the license data by the provider server.

According to a further aspect of the invention, a provider server is provided for communicating via a network with a video player as defined above, wherein the provider server comprises
- a network communication unit for receiving the log report, and
- a license control unit arranged to process the log report for detecting whether the logging data is in accordance with license conditions, and further arranged to, upon detecting that the logging data is not in accordance with the license conditions, adapt the license data or transfer of the video signal.

According to a further aspect of the invention, a log report signal is provided for transfer of a log report as defined above, the log report signal comprising the log report representing the logging data for enabling control of the license data by the provider server.

According to a further aspect of the invention, a license data signal is provided for transfer of license data as defined above, the license data signal comprising the license data comprising primary key data for decrypting the primary video stream and/or metadata key data for decrypting the metadata.

According to a further aspect of the invention, a video processing method is provided for processing a video signal as defined above, the video processing method comprising
- communicating with a provider server via a network;
- receiving the video signal and extracting the primary video stream, the metadata and the license data,
- processing the primary video stream and the metadata in accordance with the license data for providing target video according to brightness and/or color rendering capabilities of a target display device, and
- generating logging data, the logging data representing at least one operation performed by the processing on the primary video stream or the metadata, and
- providing a log report representing the logging data to the provider server for enabling control of the license data by the provider server.

According to a further aspect of the invention, a provider method is for communicating via a network with a video player as defined above, wherein the provider method comprises
- receiving the log report via a network communication unit, and
- processing the log report for detecting whether the logging data is in accordance with license conditions for the extended video, and
- upon detecting that the logging data is not in accordance with the license conditions, adapting the license data or transfer of the video signal.

The measures have the effect that the video signal enables playback of standard video according to a standardized video format such as MPEG video, and also enables rendering of extended video, both versions being protected in accordance with the license data. Thereto, the video signal has a primary video stream representing standard video and metadata defining a conversion from the standard video into the extended video, or a primary video stream representing the extended video and metadata defining a conversion from the extended video into standard video. The video signal further has license data comprising primary key data for decrypting the primary video stream, and/or metadata key data for decrypting the metadata. The license may further represent license conditions for the extended video.

The video player has a processing unit that processes the primary video stream and the metadata in accordance with the license data for providing target video according to brightness and/or color rendering capabilities of a target display device. The video player is enabled to selectively render a standard version, e.g. SDR, or an extended version, e.g. HDR, of the primary video in the primary video elementary stream by either directly using the primary video or converting said primary video using the metadata. At the rendering side, the primary video from the primary video elementary stream may be converted into target video adapted to brightness and/or color rendering capabilities of a target display device. Such capabilities may be known, preset or determined by communicating to the display. The user may be enabled to set or select a required conversion.

In this document, the video signal is a set of one or more digital signals or signal components that carry the video data, the metadata and the license data, e.g. as a multiplexed, formatted signal having multiple streams. At least some component of the video signal representing the extended video may, for example, be transferred via a medium like an optical disc, a broadcast signal or internet to a video player like an optical disc player or a TV set or set top box. The license data may be distributed separately, or as an element of a single multiplexed stream. For example, the video signal maybe broadcast in a single transport stream having the above data multiplexed, and one or more of the components of the video signal maybe transferred separately, e.g. the license data transferred via internet. The video signal may further be structured according to a known transfer format, e.g. to be downward compatible. So, HDR video may use a standardized video format such as MPEG TS. The metadata maybe inserted into some extension segment of MPEG TS or be distributed separately.

The video player as proposed communicates with a provider server, in particular to provide a log report representing logging data to the provider server for enabling control of the license data by the provider server. Thereto, a log report unit is arranged to output the log report to a network that facilitates data communication to the provider server, e.g. the internet. The logging data is generated by an audit unit. The logging data represents at least one operation performed by the processing unit on the primary video stream or the metadata. Advantageously, the provider server is aware of the operations performed on the primary video stream and/or the metadata, so that respective license conditions can be verified at the content provider side. Hence the content provider is enabled to verify the license conditions and enforce compliance by adapting the license data or transfer of the video signal upon detecting that the logging data is not in accordance with the license conditions. For example, the provider server may adapt the license data or transfer of the video signal to ban the client, revoke the user account, suspend the license for HDR and/or SDR video, suspend or terminate transferring the video stream, adapt the primary key data and/or the metadata key data, or restrict the client to render only the standard video.

Optionally, the audit unit is arranged to generate logging data representing decryption data by detecting at least one operation of decrypting of the primary video stream and/or decrypting the metadata. Advantageously, the content provider is enabled to verify if the video stream and/or metadata is correctly decrypted.

Optionally, the log report unit is arranged to output a log report comprising time data representing a time stamp of successfully processing a part of the primary video stream and/or a time stamp of successfully processing a part of the metadata. Advantageously, the content provider is made aware when a respective part of the video stream and/or metadata is actually used.

In an embodiment, the audit unit is arranged to generate logging data including deletion data by detecting at least one operation of deleting data obtained by decrypting the primary video stream and/or deleting data obtained by decrypting the metadata. Advantageously, the content provider is aware if the video stream and/or metadata have been indeed deleted, to avoid any further use. Optionally, the log report unit is arranged to output a log report representing a time stamp of the at least one operation of deleting data. Advantageously, the content provider is made aware when respective video data and/or metadata is actually deleted. Optionally, the input unit is arranged for receiving primary video stream via streaming of video data representing video frames, the audit unit is arranged to generate the deletion data by detecting deletion of decrypted data of a respective video frame, and the log report unit is arranged to output the log report within a predetermined time interval from receiving the respective video frame. Advantageously, in the event of streaming video, the content provider is made aware after, at most, the predetermined time interval, whether the decrypted data is actually deleted, enabling a quick response by adapting the license data, e.g. revoking the user account or terminating streaming the video data to the respective video player.

In an embodiment, the log report unit is arranged to output a client report representing a client type of at least one of
- the video player;
- the target display device;
- the target video. Advantageously, the content provider is made aware of the actual client using the video.

In an embodiment, the license data comprises a client indicator that indicates at least one of
- a type of device for which license is given;
- a type of target video for which license is given; and
the audit unit is arranged to generate logging data including type match data by detecting whether the video player, the target display device, and/or the target video are in accordance with the client indicator. Advantageously, the video player is made aware of the client type for which the license applies, and is enabled to verify and apply the license data to the actual devices. Moreover, the content provider is aware of the type match data enabling verification of the license conditions regarding a client type.

Optionally, the license data comprises a logging indicator that indicates at least one logging obligation which is required by the license; and
the audit unit is arranged to generate logging data in accordance with the logging indicator. Advantageously, the content provider is enabled to remotely control the generation of logging data as required.

Optionally, the license data comprises a reporting indicator that indicates at least one reporting obligation which is required by the license; and the log report unit is arranged to output the log report representing the logging data in accordance with the reporting indicator. Advantageously, the content provider is enabled to remotely control the reporting of logging data as required.

Further preferred embodiments of the devices and methods according to the invention are given in the appended claims, disclosure of which is incorporated herein by reference.

### BRIEF DESCRIPTION OF THE DRAWINGS

These and other aspects of the method and apparatus according to the invention will be apparent from and elucidated with reference to the implementations and embodiments described hereinafter, and with reference to the accompanying drawings, in which
Fig. 1 schematically illustrates a HDR transmission system,
Fig. 2 shows a video player for processing a video signal and a provider server,
Figs. 3a, b show an example of DRM license data,
Fig. 4 schematically shows a video player system,
Fig. 5 schematically shows a second example of a video player system,
Figs. 6a, b show a further example of DRM license data,
Fig. 7 schematically shows a video player system,
Fig. 8 schematically shows a further example of a video player system,
Fig. 9 shows a video processing method for processing a video signal,
Fig. 10 shows a provider method for communicating via a network with a video player,
Fig. 11a shows a computer readable medium, and
Fig. 11b shows in a schematic representation of a processor system.

The figures are purely diagrammatic and not drawn to scale. In the Figures, elements which correspond to elements already described may have the same reference numerals. The figures serve merely as non-limiting illustrations exemplifying the more general concept, while dashes may be used to indicate that a component is optional, for indicating that elements are hidden in the interior of an object, or for intangible things such as e.g. selections of objects/regions (e.g. how they may be shown on a display).

### DETAILED DESCRIPTION OF THE EMBODIMENTS

HDR (High Dynamic Range) is a video and display technology facilitating high luminance, high contrast, more details and wide color gamut. An efficient approach of transportation of HDR video signal from provider side to end-user side is to transmit video stream plus metadata which contains information defining a conversion between HDR and SDR (Standard Dynamic Range) or vice versa. Such a transportation approach can have two modes: SDR video stream + metadata; or HDR video stream + metadata, as described in WO2015007910A1.

In the first mode (SDR stream + metadata), if the target device is an SDR device, the metadata will be discarded and the SDR video stream may be rendered by the end device as it is. If the target device is an HDR device, the SDR stream and metadata will be combined into HDR video signal and then rendered by the end device.

In the second mode (HDR stream + metadata), if the target device is an SDR device, the metadata will be extracted from the HDR video stream so that the HDR video stream is converted into SDR video signal, and then rendered by the end device. If the target device is an HDR device, the HDR video stream may be rendered by the end device as it is, and the metadata will be discarded. In such a way, compatibility can be achieved by only transferring a single layer of video stream plus dynamic metadata, no matter the end device is an HDR device or an SDR device.

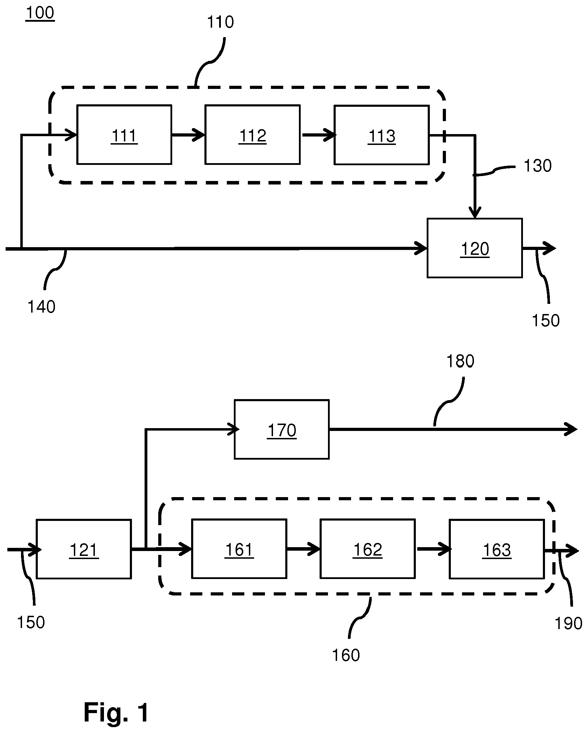

Fig. 1 schematically illustrates an exemplar HDR transmission system. An HDR transmission system requires an end-toend processing link which may include HDR pre-processing at a server or broadcaster side and HDR post-processing at the receiver side. An HDR video signal that also enables SDR forward compatibility may have two transmission modes, i.e. so called SL-HDR1 which transmits an SDR video stream plus metadata for conversion of the SDR video to HDR video, and SL-HDR2 which transmits an HDR video stream plus metadata for conversion of the HDR video to SDR video. Fig. 1 shows an example of an HDR transmission system for the second mode SL-HDR2. However, it can be appreciated that the principle idea of this invention is also applicable to the first mode SL-HDR1.

An input HDR video signal 140 is coupled to an HDR decomposition sub-system 110. In the sub-system, at a first converter 111 the EOTF curve (e.g. PQ or HLG curve) of the input HDR video signal is linearized, and, at a second converter 112, gamut mapping is performed. Next, at a third converter 113, HDR-to-SDR signal decomposition is performed. By the sub-system 110 at the content provider side, HDR metadata 130 is generated which is representative of conversion from the HDR signal to SDR signal. The HDR video signal 140 and the HDR metadata 130 are coupled to a video encoder 120 which may encrypt and encode the HDR video into a primary video stream plus the HDR metadata to generate an assembled stream constituting a video signal 150, which is sent to a receiver. The assembled stream may also include license data as elucidated below.

At the receiving side shown in the lower part of Fig. 1, a decoder 121 receives the video signal 150 and decrypts the primary video stream and the metadata. A display adapter 170 is coupled to the decrypted HDR video and generates an HDR target video signal that is adapted to the display capabilities of a connected HDR display. For example, if the receiving video player is a coupled to an HDR compatible display, the receiver can use the HDR video and optionally the HDR metadata to adapt the output stream to the display luminance of the display.

Alternatively, if the receiving video player is a coupled to a display or TV that can render SDR video only, the receiver may use the metadata to convert the decrypted HDR video into a SDR video at an SDR reconstruction sub-system 160. In the sub-system 160, at a first re-constructor 161 HDR-to-SDR signal reconstruction is performed. On the reconstructed SDR, at a second re-constructor 162, inverse gamut mapping is performed. Next, in a third re-constructor 163, conversion to an SDR output format is performed to generate an SDR video output signal 190.

The dynamic metadata includes the following information. The information specifies the parameters during the HDR pre-processing, which describe the characteristics of each original HDR picture and the relevant SDR picture, the luminance mapping, color mapping and gamut mapping variables for conversion between HDR and SDR pictures. With the dynamic metadata, the decoder can better reconstruct the SDR or HDR pictures from the encoded video, and adapt the presentation display in a best way. Below is an example list of metadata information, which is further explained in reference [1]: ETSI TS 103 433-1. Chapter 6 specifies and explaines the metadata (signal reconstruction information). It is noted that this is only an example, and metadata might be changed in different implementations.
- Signal reconstruction information
   ∘ partID - part indicator of the multi-part document
   ∘ majorSpecVersionID - Major specification version indicator
   ∘ minorSpecVersionID - Minor specification version indicator
   ∘ payloadMode - Payload carriage mode
   ∘ matrixCoefficient - Y'CC-to-R'G'B' conversion matrix coefficients
   ∘ chromaToLumaInjection - Chroma to luma injection
   ∘ kCoefficient
   ∘ gamutMappingMode
- HDR picture characteristics
   ∘ Introduction
   ∘ hdrPicColourSpace - HDR picture colour space
   ∘ hdrDisplayColourSpace - Colour space of the mastering display used to master the HDR picture
   ∘ hdrDisplayMaxLuminance - HDR mastering display maximum luminance
   ∘ hdrDisplayMinLuminance - HDR mastering display minimum luminance
- SDR picture characteristics
   ∘ sdrPicColourSpace - SDR picture colour space
   ∘ sdrDisplayMaxLuminance - SDR mastering display maximum luminance
   ∘ sdrDisplayMinLuminance - SDR mastering display minimum luminance
- Luminance mapping variables
   ∘ tmInputSignalBlackLevelOffset - Tone Mapping Input Signal Black Level Offset
   ∘ tmInputSignalWhiteLevelOffset - Tone Mapping Input Signal White Level Offset
   ∘ shadowGain - Shadow Gain Control
   ∘ highlightGain - Highlight Gain Control
   ∘ midToneWidthAdjFactor - Mid-Tone Width Adjustment Factor
   ∘ tmOutputFineTuningNumVal - Number of Tone Mapping Output Fine Tuning Function Curve Points
   ∘ tmOutputFineTuningX - Tone Mapping Output Fine Tuning Function x values
   ∘ tmOutputFineTuningY - Tone Mapping Output Fine Tuning Function y values
- Colour correction adjustment variables
   ∘ saturationGainNumVal - Number of Saturation Gain Function Curve Points
   ∘ saturationGainX - Saturation Gain Function x values
   ∘ saturationGainY - Saturation Gain Function y values
- Luminance mapping table
   ∘ luminanceMappingNumVal - Number of Luminance Mapping Curve Points
   ∘ luminanceMappingX - Luminance Mapping x values
   ∘ luminanceMappingY - Luminance Mapping y values
- Colour correction table
   ∘ colourCorrectionNumVal - Number of Colour Correction Curve Points
   ∘ colourCorrectionX - Colour Correction x values
   ∘ colourCorrectionY - Colour Correction y values
- Gamut mapping variables
   ∘ satGloballSegRatio
   ∘ satGlobal2SegRatioWCG
   ∘ satGlobal2SegRatioSCG
   ∘ sat1SegRatio
   ∘ sat2SegRatioWCG
   ∘ sat2SegRatioSCG
   ∘ lightnessMappingMode
   ∘ lmWeightFactor
   ∘ croppingModeSCG
   ∘ cmWeightFactor
   ∘ cmCroppedLightnessMappingEnabledFlag
   ∘ hueAdjMode
   ∘ hueGlobalPreservationRatio
   ∘ huePreservationRatio
   ∘ hueAlignCorrectionPresentFlag
   ∘ hueAlignCorrection
   ∘ chromAdjPresentFlag
   ∘ chromAdjParam

Furthermore, the document WO2015/007910 describes HDR metadata transport, and conversion and mapping of HDR to SDR using metadata, and vice versa. The document provides a comprehensive overview of formatted video signals representing HDR and SDR video using metadata for conversion between the ranges.

DRM (Digital Rights Management) is a widely used as a method to control content when distributed to consumers to protect the interest of content owners. Nowadays, content owners such as Hollywood studios are defining a lot of requirements to enhance the content protection based on DRM for higher quality content such as 4K HDR. The content, video and TV industry are actively establishing HDR standards and planning to start HDR broadcasting.

The video data is usually protected by encryption at the content provider side and decryption at the receiver side based on keys distributed to licensed users. Since current DRM systems are designed to protect current SDR (standard dynamic range) content, content owners and operators deem it necessary to upgrade DRM system to protect higher value HDR content with stronger security. In proposed HDR standards, HDR metadata describes the luminance and color information of each frame and together with SDR video can be used to reconstruct HDR video. Therefore, HDR metadata may also need to be protected.

The proposed system addresses the problem of metadata protection in HDR transmission. HDR content is typically protected using DRM. Currently, the mainstream movie studios like those in Hollywood require very high security on HDR content distribution and protection through the whole lift cycle. However, the content protection level in SDR device may be lower, because of the lower content quality. In this case, if the SDR content is somehow pirated, and somehow a hacker got the metadata, the hacker can reconstruct the high value HDR content using SDR video signal and the metadata. As a result, the protection of metadata in HDR transmission is very important.

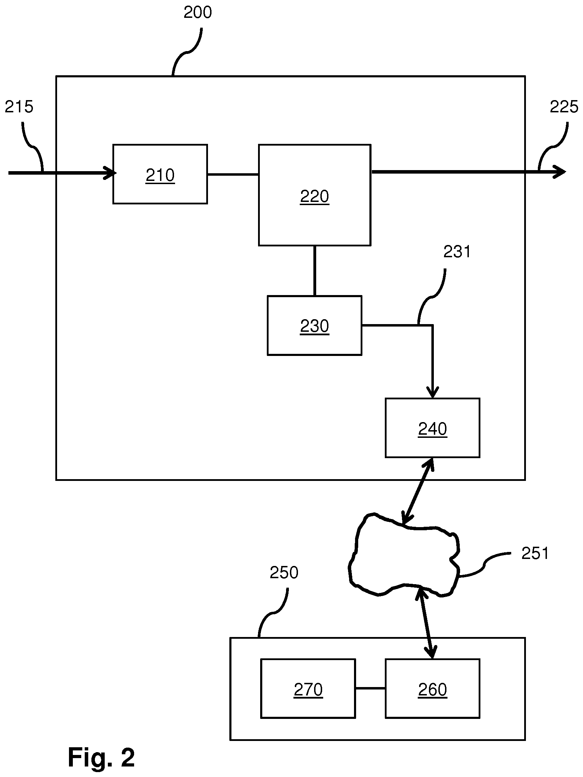

Fig. 2 shows a video player 200 for processing a video signal and a provider server 250. The video signal 215 is formatted according to a standardized transfer format, which format defines streams representing audiovisual content to be rendered. Various examples of standardized video transfer formats are elucidated in ref [1].

The video signal represents extended video having an extended range of brightness and/or color, usually called HDR as elucidated above. The ranges are extended with respect to standard video content having a standard range of brightness and/or color. Such a standard range may be defined in the standardized transfer format or a respective video format standard.

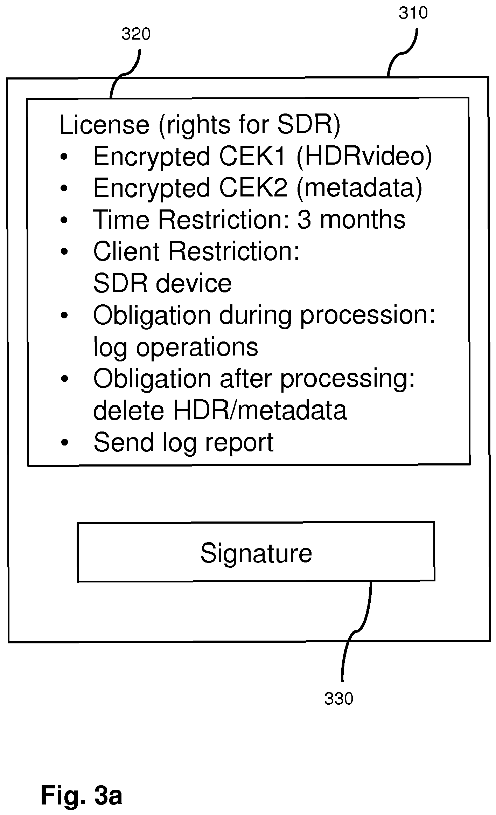

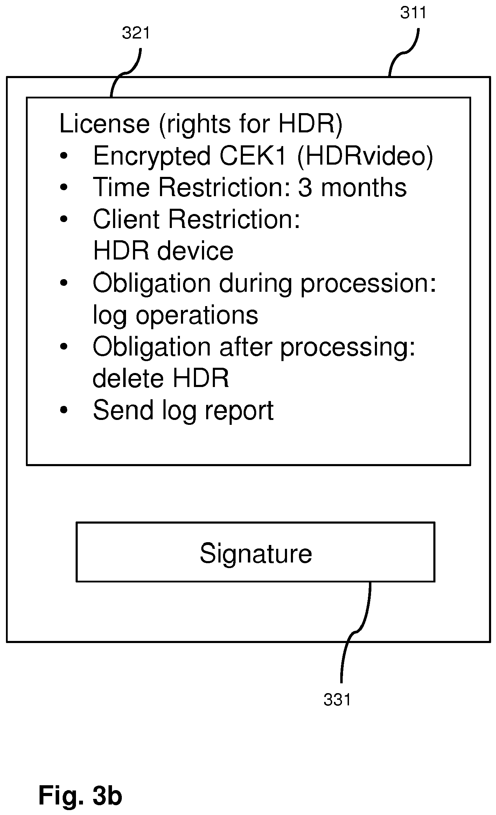

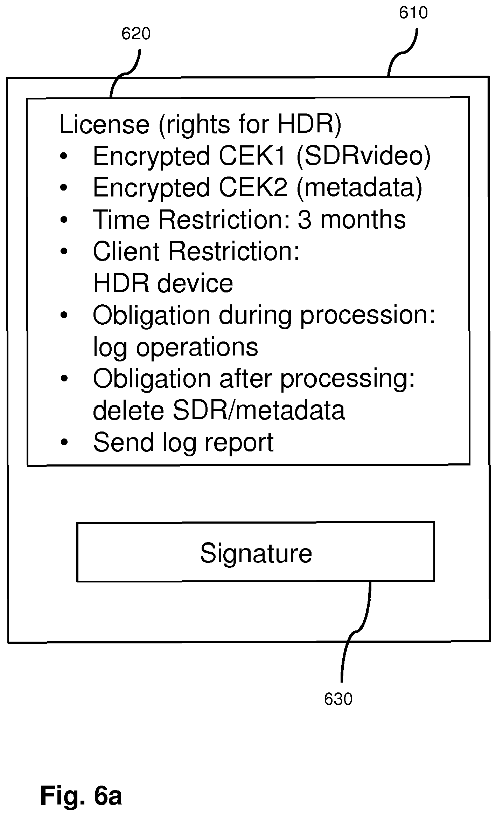

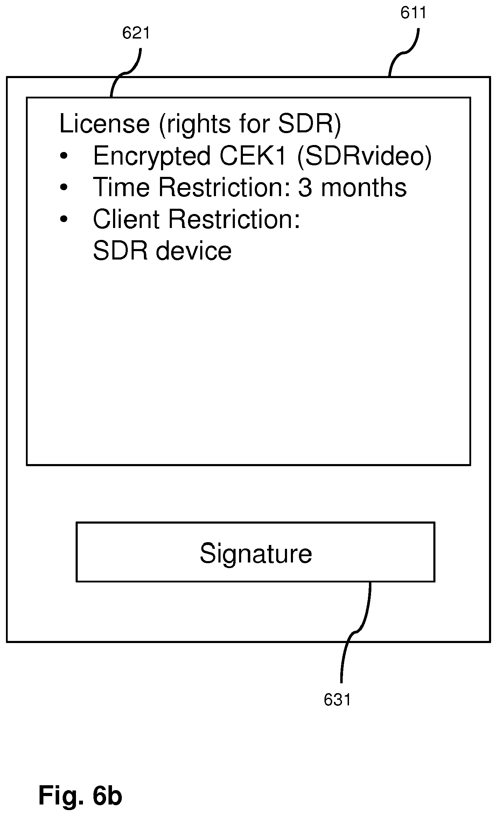

The video signal has various components, which may be transferred together, e.g. in a multiplexed signal, or as separate signals. The video signal includes a primary video stream representing standard video (SDR video) and metadata defining a conversion from the standard video into the extended video (HDR metadata). Alternatively, the video signal includes a primary video stream representing the extended video (HDR video) and metadata defining a conversion from the extended video into standard video (SDR metadata). The video signal further includes license data, which comprises primary key data for decrypting the primary video stream, and/or metadata key data for decrypting the metadata. The license data may further represent one or more license conditions for the extended video. Examples of license data are elucidated below with reference to Figs. 3 and 6.

The video player 200 is arranged for communicating with the provider server 250 via a network 251, and may thereto have a network communication unit, e.g. Wi-Fi, well-known as such. The provider server may have a server communication unit 260 and a DRM processing unit 270. The DRM processing unit may be arranged for providing and adapting the license data.

The video player further has at least one input unit 210 for receiving the video signal and extracting the primary video stream, the metadata and the license data. The video player further has a processing unit 220 arranged to process the primary video stream and the metadata in accordance with the license data for providing target video 225 according to brightness and/or color rendering capabilities of a target display device. The licensing data may include a first key for decrypting the primary video stream and a second key for decrypting the metadata. The processing may include decrypting the primary video stream and the metadata using said keys, and reconstructing the digital content using the decrypted primary video and the decrypted metadata.

The video player has an audit unit 230 arranged to generate logging data 231, the logging data representing at least one operation performed by the processing unit on the primary video stream and/or the metadata. The audit unit is arranged to log operations executed by the video player on the video stream and the metadata to obtain an audit log.

The video player has a log report unit 240 arranged to output a log report representing the logging data to the provider server for enabling control of the license data by the provider server. For example, the log report unit is arranged for sending the logging data to an authentication device at the content provider side.

In the provider server 250, upon receiving and processing the log report, the DRM processing unit may be arranged to verify the license conditions and correspondingly adapt the license data.

In a practical example, a first key CEK1 is included in a video stream license sent from a DRM server to the end device. A second key CEK2 may be included in a metadata license sent from a DRM server or a content owner to the end device. The video stream decrypted with the first key CEK1 and the metadata decrypted with the second key CEK2 are removed or refreshed after being rendered by the end device. The deletion of the video data and/or the metadata maybe included in the audit log and sent to the authentication device.

The video player and provider server may provide the following functions via the processing unit, the audit unit and the log report unit, and the DRM processing unit. In a first case, transmission of a HDR primary video stream is assumed, in combination with metadata that enables conversion of HDR video to an SDR target video signal. Then, for a client system that has rendering rights for SDR video, the following elements may be included in the license data:
∘ Content keys for primary HDR video stream and metadata
∘ Rights for SDR which enable metadata decryption
Also, a client indicator may be included in the license data, such as
∘ Restriction for SDR client, only allowing SDR target video
Also, a logging indicator may be included in the license data, such as
∘ Obligation of Log the processing of HDR video stream and metadata
∘ Obligation of deletion of HDR video stream/metadata after processing and send back proof.

For playing SDR content, the following functions are implemented in the video player:
∘ Evaluating the license data and extracting the rights to decrypt metadata/HDR;
∘ Logging operations to metadata and/or HDR video strea" and possibly also deletion of decrypted HDR video stream and metadata after SDR reconstruction;
∘ Sending the logging data to the provider server, e.g. a DRM server.
∘ When not receiving the correct logging data, the provider server may ban the client or otherwise adapt or restrict the license data.

When an end device/user is identified as malicious or cheating, it can be banned for example by:
- Revoking the certificate of that device by adding it to the CRL (certificate revoke list) in the CA (certificate authority); this is a common way of banning a client;
- Revoking the license by using some license revoking list. Some DRM systems support this kind of mechanism, e.g. Marlin DRM, see ref [2];
- Adding the device to a restriction list so that the permission of streaming the content/metadata is disabled;
- Banning the IP/MAC address of the device;
- Revoking the user account.
Further methods to ban the malicious device/user may also be applied.

A license data signal maybe provided for transfer of the license data. The license data signal comprises the license data representing primary key data for decrypting the primary video stream, and/or metadata key data for decrypting the metadata. The license data signal may also represent at least some of the license conditions for the extended video. The license data signal may be stored on a non-transitory computer readable medium.

In a second embodiment, transmission of a SDR primary video stream is assumed, in combination with metadata that enables conversion of SDR video to an HDR target video signal. Then, in license data for a client system that has rendering rights for HDR video, the following elements maybe included:
∘ Content key for primary SDR video stream and metadata;
∘ Rights for HDR which enable metadata decryption;
∘ Restriction for HDR client, allowing at least HDR target video;
∘ Obligation of Log the processing of SDR video stream and metadata
∘ Obligation of deletion of SDR video stream/metadata after processing and send back proof.

For playing HDR content, the following functions may be implemented:
∘ Evaluating the license data and extracting the rights to decrypt metadata/SDR video stream;
∘ Logging operations to metadata and/or SDR video stream, and possibly also deletion of decrypted SDR video stream and metadata after HDR reconstruction;
∘ Sending the logging data to a provider server, e.g. a DRM server.
∘ When not receiving the correct logging data, the DRM server may ban the client or otherwise adapt or restrict the license data.

In an embodiment, the audit unit 230 is arranged to generate logging data representing decryption data by detecting at least one operation of decrypting of the primary video stream and/or decrypting the metadata stream.

In an embodiment, the log report unit 240 is arranged to output a log report comprising time data representing a time stamp of successfully processing a part of the primary video stream and/or a time stamp of successfully processing a part of the metadata.

In an embodiment, the audit unit 230 is arranged to generate logging data including deletion data by detecting at least one operation of deleting data obtained by decrypting the primary video stream and/or deleting data obtained by decrypting the metadata. Optionally, the log report unit is arranged to output a log report representing a time stamp of the at least one operation of deleting data.

In an embodiment, the log report unit 240 is arranged to output a client report representing a client type of the video player, and/or the target display device, and/or the target video. The provider server is enabled to verify whether the license rights allow rendering for the client as indicated in the log report.

In an embodiment, the license data comprises a client indicator that indicates a type of device for which license is given, ad/or a type of target video for which license is given. The audit unit 230 may be arranged to generate logging data including type match data by detecting whether the video player, the target display device, and/or the target video are in accordance with the client indicator.

In an embodiment, the license data comprises a logging indicator that indicates at least one logging obligation which is required by the license. The audit unit 230 may be arranged to generate logging data in accordance with the logging indicator.

In an embodiment, the license data comprises a reporting indicator that indicates at least one reporting obligation which is required by the license. The log report unit 240 may be arranged to output the log report representing the logging data in accordance with the reporting indicator.

Further detailed embodiments of the video player are provided below. For example, in other embodiments of the video player, in the case of streaming, deletion checks maybe done continuously during the content playing process. Also, the metadata distribution and proof validation may be done directly by a Content Owner server. Obligations and restrictions may be stated in the license but directly implemented and required by default.

Figs. 3a, b show an example of DRM license data. The example shows license data for a video signal that has primary HDR video stream, and metadata for conversion of HDR to SDR video. DRM license data is used to restrict the usage of primary video and metadata, and, for SDR, may include the following information:
- only decrypt metadata when this right is granted.
- Device Type Restriction: only SDR device can use.
- Obligation to log the operation to the metadata
- Obligation to delete the metadata and send the log to server.

Fig. 3a shows an example of SDR license data 310. License rights 320 for rendering SDR video are provided. The SDR rights may include an encrypted key CEK1 for decrypting the primary HDR video data and an encrypted key CEK2 for decrypting the metadata. A time restriction maybe included, e.g. 3 months, for limiting a period of validity of the license. Also, a client restriction as an indicator of the type of client or client device may be included, e.g. a "client restriction" to a SDR device. The SDR license may further include a logging obligation for logging one or more specific operations, and/or an obligation to delete, after processing, any decrypted HDR or metadata. Finally, an obligation to send a log report may be included. The total set of license data may be cryptographically protected, e.g. by a signature 330.

Fig. 3b shows an example of HDR license data 311. License rights 321 for rendering HDR video are provided. The HDR rights may include an encrypted key CEK1 for decrypting the primary HDR video data. In this example, the metadata needs not be used, so there is no encrypted key for decrypting the metadata. A time restriction may be included, e.g. 3 months, for limiting a period of validity of the license. Also, a client restriction as an indicator of the type of client or client device may be included, e.g. a "client restriction" to a HDR device. The HDR license may further include a logging obligation for logging one or more specific operations, and/or an obligation to delete, after processing, any decrypted HDR data. Finally, an obligation to send a log report may be included. The total set of license data may be cryptographically protected, e.g. by a signature 331.

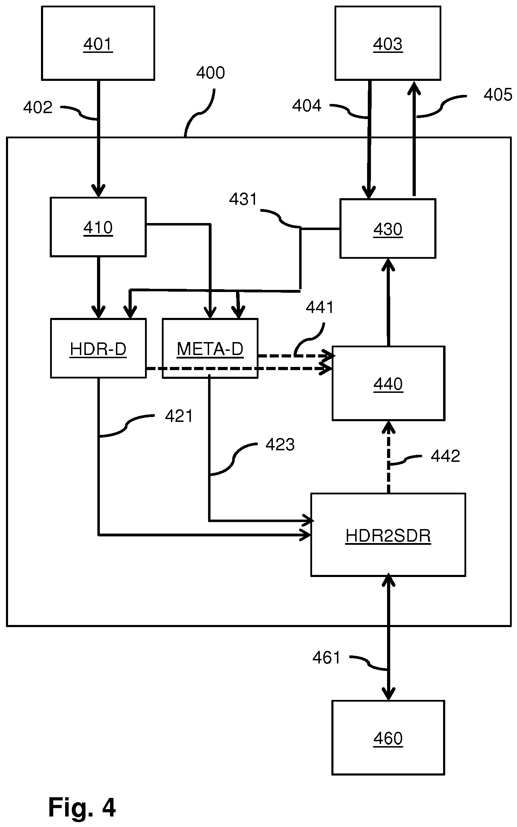

Fig. 4 schematically shows a video player system. The system has a video player 400 arranged to render SDR target video 461 based on an input video signal 402 from a video content server 401 received by an input unit 410. The SDR video is outputted to a SDR display device 460. The video signal has a primary video stream representing the extended video (HDR) and metadata defining a conversion from the extended video into standard video (SDR), which streams are encrypted for transfer.

The input unit extracts the encrypted primary video from the video signal, which is then forwarded to a HDR decryption unit marked HDR-D in the Figure. The input unit also extracts the encrypted metadata from the video signal, which is then forwarded to a metadata decryption unit marked META-D in the Figure. The metadata decryption unit provides the decrypted metadata 423. The HDR decryption unit generates decrypted primary video data 421 which is forwarded to a video processing unit marked HDR2SDR that performs a conversion of HDR video data to the SDR target video 461 using the decrypted metadata 423. Such conversions are known as such, for example from ref [1], chapter 6.

The video player has a DRM agent 430 for performing digital rights management. The DRM agent has an input/output section coupled to a network to communicate with one or more DRM servers 403, for example, to receive license data 404 and to transmit a log report 405. The DRM agent retrieves decryption keys 431 from the license data, and, upon verifying further license conditions such as client type and time restriction, may provide a content key to HDR-D and a metadata key to META-D. Also, the DRM agent may gather the logging data and generate a log report based on the logging data. The log report is then transferred to the provider server 403. A log report signal 405 may be provided for transfer of the log report. The log report signal carries the log report representing the logging data for enabling control of the license data by the provider server. The log report signal may be stored on a non-transitory computer readable medium.

The video player has an audit log module 440. The module generates logging data based on monitoring various operations in the video player. For example, decryption logging data 441 is generated based on decryption operations of the primary video in the HDR-D and of metadata in META-D. Reconstruction and/or rendering logging data 442 are generated based on performing the reconstruction of a particular type of target video. Also, deletion logging data may be generated after deleting any decrypted video or metadata.

The above system, in the operation of processing a video signal having primary HDR video, may execute the following workflow.
- The DRM agent gets license data from the DRM server
- Upon receiving the right for SDR, the DRM agent decrypts the CEK1 for HDR and CEK2 for metadata,
- HDR-D decrypts the HDR content, the META-D decrypts the metadata.
- The HDR2SDR module then reconstructs the SDR content
- The HDR decryption module, the metadata decryption module, and the HDR2SDR module delete the HDR video/metadata generated during processing
- During the above process, the audit log module logs the operations on metadata and HDR
- The DRM agent retrieves the logging data and sends a log report to the DRM server containing proof of the logged operations
- If the DRM server does not receive the required proof after a successful broadcasting, the DRM server may ban the client.
In an embodiment for content streaming:
- The metadata and HDR content are deleted after the relevant video frame is processed
- The audit log is to be sent out in a predetermined time interval, e.g. 2 minutes, to the DRM server
- DRM server monitors received log reports. If after the given time period a deletion log is not received, or the log report is invalid, the DRM server may ban the client and/or ask the content server to stop streaming to the client.

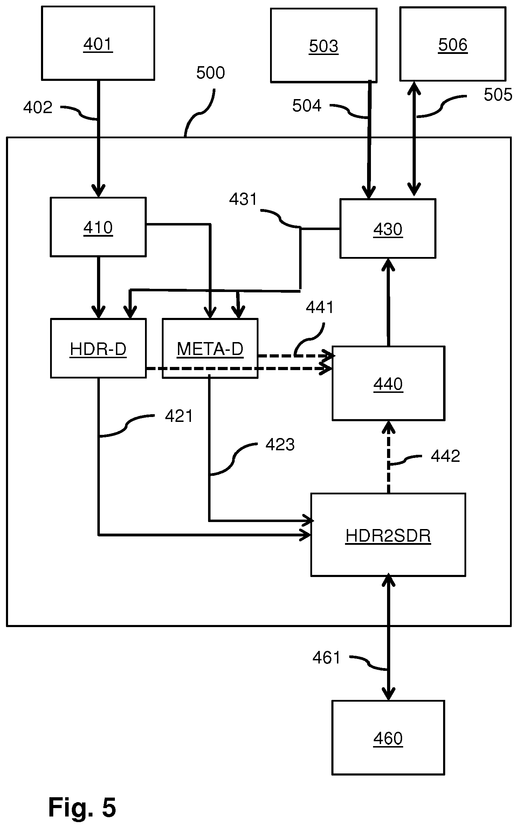

Fig. 5 schematically shows a second example of a video player system. The system has a video player 500 arranged to render SDR target video 461 based on an input video signal 402 from a video content server 401 received by an input unit 410. Various components and signals correspond to the embodiment of Fig. 4 and are correspondingly numbered and described above,

The provider server is now constituted by two separate servers, a DRM server 503 and an owner server 506. The owner server provides part of the license data, in particular the encrypted metadata key, and receives the log report, as indicated by two-way arrow 505. In this embodiment, the encryption and distribution of metadata may not be done by a DRM provider, but is directly provided by the owner server, e.g. by the owner of the content such as a movie studio. Because the metadata is not very large, this is not a huge burden to the content owner. So, in this case, the encrypted metadata are distributed by the content owner. The content owner may use some third-party system, e.g. DRM system, to distribute the metadata key in a DRM license, or they can validate the client themselves and distribute the license directly. The license data structure is similar to the one shown in Figs. 3a and 3b. The log report is send to owner server instead of the DRM server.

In a further embodiment, the content owner may not use a license data structure but only distribute the key material, while the restriction related information may be sent separately to the client and/or maybe checked before distribution of the video content. In this embodiment, some or all of the logging obligations may not explicitly be stated in license data, but may be implanted in software of the video player before delivery of the video player to the client.

Figs. 6a, b show a further example of DRM license data. The example shows license data for a video signal that has primary SDR video, and metadata for conversion of SDR video to HDR video. DRM license data is used to restrict the usage of primary video and metadata, and, for HDR, may include the following information:
- only decrypt HDR metadata when this right is granted.
- Device Type Restriction: only HDR device can use.
- Obligation to log the operation to the metadata
- Obligation to delete the metadata and send the log to server.

Fig. 6a shows an example of HDR license data 610. License rights 620 for rendering HDR video are provided. The HDR rights may include an encrypted key CEK1 for decrypting the primary SDR video data and an encrypted key CEK2 for decrypting the metadata. A time restriction maybe included, e.g. 3 months, for limiting a period of validity of the license. Also, a client restriction as an indicator of the type of client or client device may be included, e.g. a "client restriction" to a HDR device. The HDR license may further include a logging obligation for logging one or more specific operations, and/or an obligation to delete, after processing, any decrypted SDR or metadata. Finally, an obligation to send a log report may be included. The total set of license data may be cryptographically protected, e.g. by a signature 630.

Fig. 6b shows an example of HDR license data 611. License rights 621 for rendering SDR video are provided. The SDR rights may include an encrypted key CEK1 for decrypting the primary SDR video data. In this example, the metadata need not be used, so there is no encrypted key for decrypting the metadata. A time restriction may be included, e.g. 3 months, for limiting a period of validity of the license. Also, a client restriction as an indicator of the type of client or client device maybe included, e.g. a "client restriction" to a SDR device. The total set of license data may be cryptographically protected, e.g. by a signature 331.

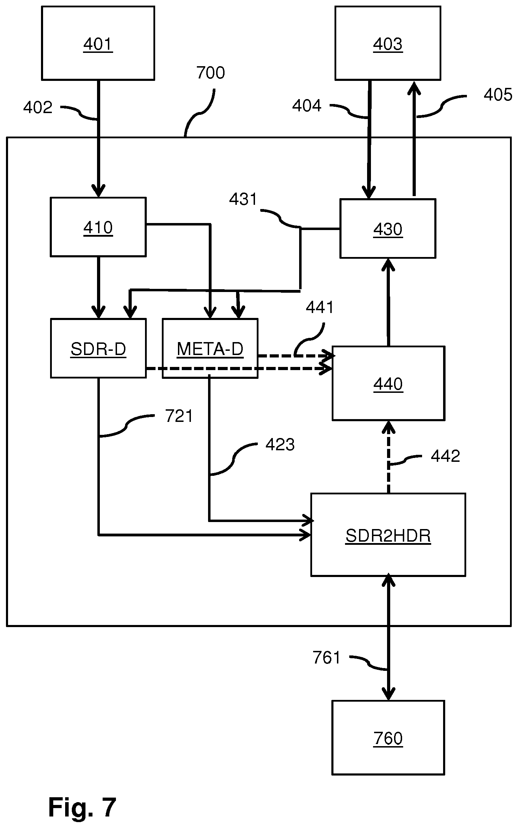

Fig. 7 schematically shows a video player system. The system has a video player 700 arranged to render HDR target video 761 based on an input video signal 402 from a video content server 401 received by an input unit 410. The HDR video is outputted to a HDR display device 760. The video signal has a primary video stream representing the standard video (SDR) and metadata defining a conversion from the standard video into extended video (HDR), which streams are encrypted for transfer.

The input unit extracts the encrypted primary video from the video signal, which is then forwarded to a SDR decryption unit marked SDR-D in the Figure. The input unit also extracts the encrypted metadata from the video signal, which is then forwarded to a metadata decryption unit marked META-D in the Figure. The metadata decryption unit provides the decrypted metadata 423. The HDR decryption unit generates decrypted primary video data 721 which is forwarded to a video processing unit marked SDR2HDR that performs a conversion of SDR video data to the HDR target video 761 using the decrypted metadata 423. Such conversions are known as such, for example from ref [1], chapter 6.

The video player has a DRM agent 430 for performing digital rights management. The DRM agent has an input/output section coupled to a network to communicate with one or more DRM servers 403, for example, to receive license data 404 and to transmit a log report 405. The DRM agent retrieves decryption keys 431 from the license data, and, upon verifying further license conditions such as client type and time restriction, may provide a content key to SDR-D and a metadata key to META-D. Also, the DRM agent may gather the logging data and generate a log report based on the logging data. The log report 405 is then transferred to the provider server 403.

The video player has an audit log module 440. The module generates logging data based on monitoring various operations in the video player. For example, decryption logging data 441 is generated based on decryption operations of the primary video in the SDR-D and of metadata in META-D. Reconstruction and/or rendering logging data 442 are generated based on performing the reconstruction of a particular type of target video. Also, deletion logging data may be generated after deleting any decrypted video or metadata.

The above system, in the operation of processing a video signal having primary SDR video, may execute the following workflow.
- The DRM agent gets license data from the DRM server
- Upon receiving the right for HDR, the DRM agent decrypts the CEK1 for SDR and CEK2 for metadata,
- SDR-D decrypts the SDR content, the META-D decrypts the metadata.
- The SDR2HDR module then reconstructs the HDR content
- The SDR decryption module, the metadata decryption module, and the SDR2HDR module delete the SDR video stream/metadata generated during processing
- During the above process, the audit log module logs the operations on metadata and SDR video
- The DRM agent retrieves the logging data and sends a log report to the DRM server containing proof of the logged operations
- If the DRM server does not receive the required proof after a successful broadcasting, the DRM server may ban the client.
In an embodiment for content streaming:
- The metadata and SDR content are deleted after the relevant frame is processed
- The audit log is to be sent out in a predetermined time interval, e.g. 2 minutes, to the DRM server
- DRM server monitors received log reports. If after the given time period a deletion log is not received, or the log report is invalid, the DRM server may ban the client and/or ask the content server to stop streaming to the client.

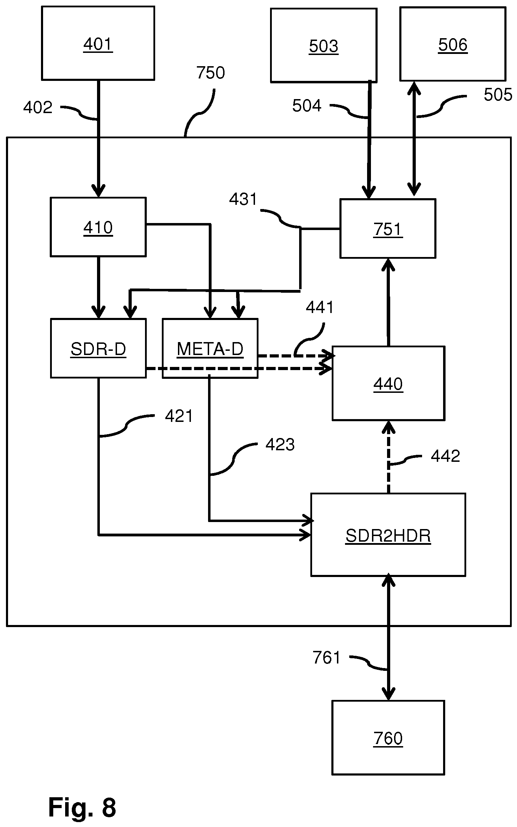

Fig. 8 schematically shows a further example of a video player system. The system has a video player 750 arranged to render HDR target video 761 based on an input video signal 402 from a video content server 401 received by an input unit 410. Various components and signals correspond to the embodiment of Fig. 7 and are correspondingly numbered and described above,

The provider server is now constituted by two separate servers, a DRM server 503 and an owner server 506, similar to the configuration as shown in Fig. 5 and described above. The license data structure is similar to the one shown in Figs. 6a and 6b. The DRM agent 751 is arranged to send the log report to owner server instead of the DRM server.

In the above embodiments, the DRM agent is a trusted unit which generates and transmits the log report based on the logging data of the audit log module, which logs the execution of the DRM operations, especially when the content key is made available. So, through the log report, the server receives reliable information on whether and how long the SDR, metadata and HDR content are decrypted, processed and/or deleted from the memory, and optionally also whether data is copied or stored, or transmitted, before deletion. As a result, improper operation can be detected by the server.

In a practical embodiment, the above-mentioned DRM agent, and the various other units of the video player maybe implemented as separate hardware and/or software units, or one or more of the units may be combined in a single hardware unit having respective software encoding the various functions, or maybe functional components within a multi-purpose processing unit. To avoid malicious parties to manipulate the various decrypted data and license rights, the respective units may be implemented in a protected part of the video player, in particular the DRM agent and Audit log module. For the system to reliably work the DRM agent and Audit log module may be protected by code protection technology known as such, e.g. a "trusted execution environment (TEE)", code signing, code obfuscation, etc. TEE is widely used to enhance the security in DRM systems. Typically, in hardware based security for a DRM client, the TEE technology is used to protect the integrity and confidentiality of sensible modules. A practical example of TEE is described the Marlin DRM system, see reference document [2]. A license suspension mechanism in Marlin is described in section 6.2 of ref [2].

In an embodiment, the audit log module is integrated in the operating system (OS). Code integrated in the OS may not be revised and substituted easily (compared to the application level code). The server may require version and/or integrity proof of the OS as well as regularly update the OS remotely. As such, providing such a secure environment and/or operating system is known and not further described here.

The coded and protected functions for auditing and logging may be called by the lower level operation code such as external storage I/O, network connection, and memory operation. The lower level operations maybe called by other high-level service modules such as content decryption, metadata decryption, media decoding, HDR or SDR reconstruction, etc. So, during operation, the related lower operations may be logged and logging data may be reported.

In the log report, the system has to provide "proof" to the server. This proof must be protected against manipulation. In a practical embodiment such protection may be provided by code protection of DRM agent, log module and/or lower level operation drivers, through the methods mentioned above. For example, the log report can be signed by a private key of the log module assigned by a trusted central authority (CA), and transmission security can be achieved by common technology such as TLS.

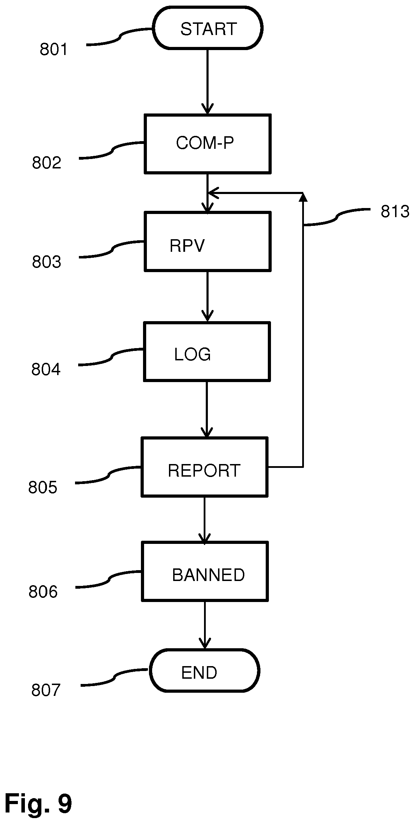

Fig. 9 shows a video processing method for processing a video signal. The video signal representing extended video and its components, and the license data, have been described above. The video processing method has the following stages.

After starting the operation of video processing at step START 801 the method involves, in stage COM-P 802, communicating with a provider server via a network for acquiring the license data. Next, in stage RPV 803, the method receives the video signal and extracts the primary video stream, the metadata and the license data. Also, in that stage the primary video stream and the metadata are processed in accordance with the license data for providing target video according to brightness and/or color rendering capabilities of a target display device. In a further stage LOG 804, the method generates logging data. The logging data represents at least one operation performed by the processing on the primary video stream or the metadata. Then, in stage REPORT 806, the method provides a log report representing the logging data to the provider server for enabling control of the license data by the provider server.

The provider server, upon monitoring the log reports, determines whether the operation of the method is in accordance with the license conditions. If so, the provider server allows the operation of the method stages RPV, LOG and REPORT to continue, as indicated by arrow 813. However, upon detecting a violation of the license conditions, the provider server adapts the license data to adjust or terminate the operation of the video processing, which is called banning the respective operation. If so, the method proceeds to stage BANNED 806, and the video processing ends at node END 807. In practice, the banning maybe achieved by modifying encryption or decryption keys for respective components of the video signal, without providing updated keys to the method. Also, the transfer or streaming of the video signal itself may be terminated.

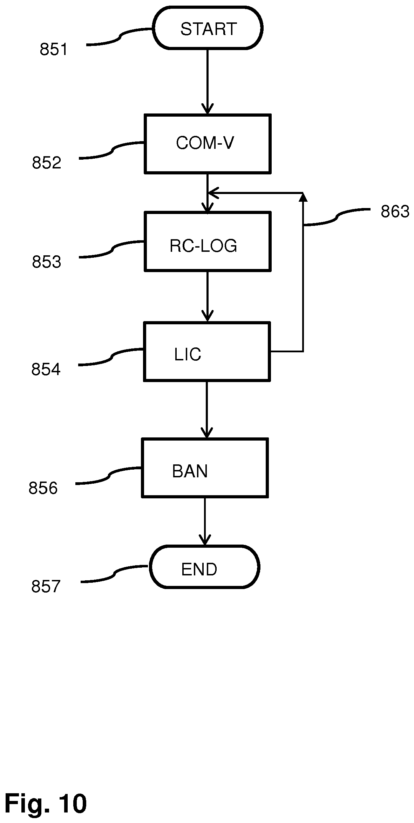

Fig. 10 shows a provider method for communicating via a network with a video player for processing a video signal as described above, or a system operating according to the method of Fig. 9. The video signal representing extended video and its components, and the license data, have been described above. The server method has the following stages.

After starting the operation of server at step START 851 the method involves, in stage COM-V 852, communicating with a provider server via a network for providing the license data. Next, in stage RC-LOG 853, the provider method receives at least one log report via a network communication unit. Next, in a stage LIC 854
the log report is processed for detecting whether the logging data is in accordance with the license conditions. Upon detecting that the logging data is not in accordance with the license conditions, the license data is adapted to ban the respective client in stage BAN 856. The monitoring of the now banned client is terminated and the method stops at stage END 857. Upon detecting that the logging data is in accordance with the license conditions, the method proceeds from stage LIC back to stage RC-LOG to receive a next log report, as indicated by arrow 863.

In the above description examples have been discussed using HDR video as an example of extended video having an extended range of brightness and/or color, and SDR video as an example of standard video having a standard range for brightness and/or color. It is to be noted that the distribution system maybe applied for transferring, via a video signal, any type of video having a first range of brightness and/or color in combination with a second version of the same video having a second range of brightness and/or color.

Computer program products, downloadable from a network and/or stored on a computer-readable medium and/or microprocessor-executable medium, are provided that comprise program code instructions for implementing the above methods when executed on a computer for processing video information, as elucidated further below.

Typically, the video player device and the provider server interact via a network like internet, the plyer and server both comprising a processor which executes appropriate software stored at the devices; for example, that software may have been downloaded and/or stored in a corresponding memory, e.g., a volatile memory such as RAM or a non-volatile memory such as Flash (not shown). The devices and servers may for example be equipped with microprocessors and memories (not shown). Alternatively, the devices and server may, in whole or in part, be implemented in programmable logic, e.g., as field-programmable gate array (FPGA). The various units, devices and servers maybe implemented, in whole or in part, as a so-called application-specific integrated circuit (ASIC), i.e. an integrated circuit (IC) customized for their particular use. For example, the circuits maybe implemented in CMOS, e.g., using a hardware description language such as Verilog, VHDL etc.

Many different ways of executing the methods are possible, as will be apparent to a person skilled in the art. For example, the order of the stages or steps can be varied or some stages may be executed in parallel. Moreover, in between steps other method steps maybe inserted. The inserted steps may represent refinements of the method such as described herein, or may be unrelated to the method.

A method according to the invention may be executed using software, which comprises instructions for causing a processor system to perform the respective method. Software may only include those steps taken by a particular sub-entity of the system. The software may be stored in a suitable storage medium, such as a hard disk, a floppy, a memory etc. The software may be sent as a signal along a wire, or wireless, or using a data network, e.g., the Internet. The software maybe made available for download and/or for remote usage on a server. A method according to the invention may be executed using a bit stream arranged to configure programmable logic, e.g., a field-programmable gate array (FPGA), to perform the method. It will be appreciated that the software may be in the form of source code, object code, a code intermediate source and object code such as partially compiled form, or in any other form suitable for use in the implementation of the method according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

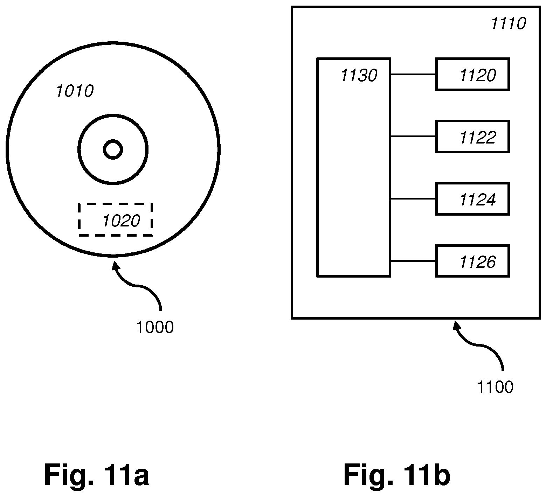

Fig. 11a shows a computer readable medium 1000 having a writable part 1010 comprising a computer program 1020, the computer program 1020 comprising instructions for causing a processor system to perform one or more of the above methods in the system as described above. The computer program 1020 may be embodied on a non-transient computer readable medium 1000 as physical marks or by means of magnetization of elements of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said methods.

Fig. 11b shows in a schematic representation of a processor system 1100 according to an embodiment of the device or server as described above. The processor system may comprise a circuit 1110, for example one or more integrated circuits. The architecture of the circuit 1110 is schematically shown in the Figure. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication to a network, using an antenna and/or connectors, respectively.

In summary, a video player processes a HDR video signal that has a primary video stream representing SDR video and metadata defining a conversion from SDR into HDR video, or HDR video and metadata defining a conversion from HDR into SDR video. The video signal also has license data representing decryption keys for the extended video. The video player communicates with a provider server, and receives the video signal. A processing unit processes the primary video stream and the metadata in accordance with the license data for providing target video according to brightness and/or color rendering capabilities of a target display device. An audit unit generates logging data representing operations performed on the primary video stream or the metadata. A log report unit outputs a log report to the provider server for enabling control of the license data.

It will be appreciated that, for clarity, the above description describes embodiments of the invention with reference to different functional units and processors. However, it will be apparent that any suitable distribution of functionality between different functional units or processors may be used without deviating from the invention. For example, functionality illustrated to be performed by separate units, processors or controllers may be performed by the same processor or controllers. Hence, references to specific functional units are only to be seen as references to suitable means for providing the described functionality rather than indicative of a strict logical or physical structure or organization. The invention can be implemented in any suitable form including hardware, software, firmware or any combination of these.

It is noted that in this document the word 'comprising' does not exclude the presence of elements or steps other than those listed and the word 'a' or 'an' preceding an element does not exclude the presence of a plurality of such elements, that any reference signs do not limit the scope of the claims, that the invention may be implemented by means of both hardware and software, and that several 'means' or 'units' maybe represented by the same item of hardware or software, and a processor may fulfill the function of one or more units, possibly in cooperation with hardware elements. Further, the invention is not limited to the embodiments, and the invention lies in each and every novel feature or combination of features described above or recited in mutually different dependent claims.

### Reference documents:

[1] ETSI TS 103 433-1 V1.1.6 (2017-06) - "High-Performance Single Layer High Dynamic Range (HDR) System; Part 1: Directly Standard Dynamic Range (SDR) Compatible HDR System (SL-HDR1)" available from https://docbox.etsi.org/Broadcast/open/ts_10343301v010106p_final%20draft.pdf
[2] "Marlin Broadband Delivery System - Specification Version 1.2.3; April 27, 2010" by the Marlin Developer Community, available from http://www.marlin-trust.com/

## Claims

1. Video player (200) for processing a video signal (215) according to a standardized transfer format, the standardized transfer format defining streams representing video content to be rendered;
the video signal representing extended video having an extended range of brightness and/or color with respect to standard video content having a standard range of brightness and/or color, the standard range being as defined in the standardized transfer format;
the video signal comprising
- a primary video stream representing standard video and metadata defining a conversion from the standard video into the extended video, or
- a primary video stream representing the extended video and metadata defining a conversion from the extended video into standard video;
and the video signal further comprising
- license data comprising primary key data for decrypting the primary video stream and/or metadata key data for decrypting the metadata;
the video player being arranged for communicating with a provider server via a network, and the video player comprising
- at least one input unit (210) for receiving the video signal and extracting the primary video stream, the metadata and the license data,
- a processing unit (220) arranged to process the primary video stream and the metadata stream in accordance with the license data for providing target video (225) according to brightness and/or color rendering capabilities of a target display device, and
- an audit unit (230) arranged to generate logging data, the logging data representing at least one operation performed by the processing unit on the primary video stream or the metadata, and
- a log report unit (240) arranged to output a log report representing the logging data to the provider server for enabling control of the license data by the provider server.

2. Video player as claimed in claim 1, wherein
the audit unit (230) is arranged to generate the logging data representing decryption data by detecting at least one operation of decrypting of the primary video stream and/or decrypting the metadata.

3. Video player as claimed in any of the preceding claims, wherein
the log report unit (240) is arranged to output a log report comprising time data representing a time stamp of successfully processing a part of the primary video stream and/or a time stamp of successfully processing a part of the metadata.

4. Video player as claimed in any of the preceding claims, wherein
the audit unit (230) is arranged to generate the logging data including deletion data by detecting at least one operation of deleting decrypted data obtained by decrypting the primary video stream and/or obtained by decrypting the metadata stream.

5. Video player as claimed in claim 4, wherein the log report unit (240) is arranged to output a log report representing a time stamp of the at least one operation of deleting data, or
wherein the input unit is arranged for receiving primary video stream via streaming of video data representing video frames,
the audit unit is arranged to generate the deletion data by detecting deletion of decrypted data of a respective video frame, and
the log report unit is arranged to output the log report within a predetermined time interval from receiving the respective video frame.

6. Video player as claimed in any of the preceding claims, wherein
the log report unit (230) is arranged to output a log report representing a client type of at least one of
- the video player;
- the target display device;
- the target video.

7. Video player as claimed in any of the preceding claims, wherein
the license data comprises a client indicator that indicates at least one of
- a type of device for which license is given;
- a type of target video for which license is given; and
the audit unit (230) is arranged to generate logging data including type match data by detecting whether the video player, the target display device, and/or the target video are in accordance with the client indicator.

8. Video player as claimed in any of the preceding claims, wherein
the license data comprises a logging indicator that indicates at least one logging obligation which is required by the license; and
the audit unit (230) is arranged to generate logging data in accordance with the logging indicator.

9. Video player as claimed in any of the preceding claims, wherein
the license data comprises a reporting indicator that indicates at least one reporting obligation which is required by the license; and
the log report unit (240) is arranged to output the log report representing the logging data in accordance with the reporting indicator.

10. Provider server (250) arranged for communicating via a network with a video player as defined in any of the preceding claims,
wherein the provider server comprises
- a network communication unit (260) for receiving the log report, and
- a license control unit (270) arranged to process the log report for detecting whether the logging data is in accordance with license conditions, and further arranged to, upon detecting that the logging data is not in accordance with the license conditions, adapt the license data or transfer of the video signal.

11. Log report signal (405,505) for transfer of a log report as defined in any of the preceding claims 1-9, the log report signal comprising the log report representing the logging data for enabling control of the license data by the provider server.

12. License data signal (404,504) for transfer of license data as defined in any of the preceding claims 1-9, the license data signal comprising the license data comprising primary key data for decrypting the primary video stream and/or metadata key data for decrypting the metadata.

13. Video processing method for processing a video signal (20,30) according to a standardized transfer format, the standardized transfer format defining streams representing audiovisual content to be rendered;
the video signal representing extended video having an extended range of brightness and/or color with respect to standard video content having a standard range of brightness and/or color, the standard range being as defined in the standardized transfer format;
the video signal comprising
- a primary video stream representing standard video and metadata defining a conversion from the standard video into the extended video, or
- a primary video stream representing the extended video and metadata defining a conversion from the extended video into standard video;
and the video signal further comprising
- license data comprising primary key data for decrypting the primary video stream and/or metadata key data for decrypting the metadata;
wherein the video processing method comprises
- communicating with a provider server via a network;
- receiving the video signal and extracting the primary video stream, the metadata and the license data,
- processing the primary video stream and the metadata in accordance with the license data for providing target video according to brightness and/or color rendering capabilities of a target display device, and
- generating logging data, the logging data representing at least one operation performed by the processing on the primary video stream or the metadata, and
- providing a log report representing the logging data to the provider server for enabling control of the license data by the provider server.

14. Provider method for communicating via a network with a video player as defined in any of the preceding claims 1-9,
wherein the provider method comprises
- receiving the log report via a network communication unit, and
- processing the log report for detecting whether the logging data is in accordance with license conditions for the extended video, and
- upon detecting that the logging data is not in accordance with the license conditions, adapting the license data or transfer of the video signal.

15. Computer program product downloadable from a network and/or stored on a computer-readable medium and/or microprocessor-executable medium, the product comprising program code instructions for implementing a method according to claim 13 or 14 when executed on a computer.
